# EUROPEAN PATENT SPECIFICATION

(11) **EP 3 359 402 B1**
(45) Date of publication and mention of the grant of the patent: **14.08.2019**
(21) Application number: 16810104.6
(22) Date of filing: 07.10.2016
(51) Int. Cl.: B60H 3/02, B01D 53/06, B01D 53/26, F24F 3/14, B60H 1/32

(54) **AN AIR DRYING AND HEATING SYSTEM WITH A SOLID DESICCANT**
LUFTTROCKNUNGS- UND HEIZSYSTEM MIT EINEM FESTSTOFFTROCKENMITTEL
SYSTÈME DE CHAUFFAGE ET DE SÉCHAGE D'AIR AVEC UN DÉSHYDRATANT SOLIDE

(30) Priority: 07.10.2015 TR 201512427
(43) Date of publication of application: 15.08.2018
(73) Proprietor: Tofas Turk Otomobil Fabrikasi Anonim Sirketi, Bursa (TR)
(72) Inventor: AYARTURK, Hasan, 16369 Bursa (TR)
(74) Representative: Dericioglu Kurt, Ekin
(86) International application number: PCT/TR2016/050372
(87) International publication number: WO 2017/061973

(56) References cited:
- WO-A1-2017/082844
- JP-A- 2006 213 090
- JP-A- 2006 306 293
- US-A- 4 071 336
- US-A- 5 878 590
- US-A- 6 083 304
- US-A1- 2007 028 769

## Description

### Field of the Invention

The present invention relates to an air drying and heating system with a solid desiccant which is developed for the demister systems of the vehicles, and which provides comfort for the driver in the vehicle cabin.

### Background of the Invention

Dehumidifying agent holds or releases humidity due to the vapor pressure difference between the humid air and its surface. The dehumidifying agent which becomes saturated after it holds enough amount of humidity on its surface is wetted and its humidity is removed, and it becomes dehumidifying again (regeneration). The dehumidifying cooling systems use adsorption or absorption processes in order to dehumidify the air. The solid dehumidifying agents used in adsorption process keep the water molecules on their pores on the surface, and chemical change is not observed in them. Liquid dehumidifying agents used in absorption process generally can hold more water relative to the solid dehumidifying agent per unit amount, however as the amount of the water that is kept increases, the facility problems increase. Silica gel, active alumina, lithium chloride salt and molecular sieves are most commonly used as solid dehumidifying agent. Besides, titanium silicate and synthetic polymers are new generation solid dehumidifying agents developed to make cooling applications more efficient. Liquid dehumidifying agents are solutions such as lithium chlorite, lithium bromide, calcium chlorite, and triethylene glycol.

In air conditioning system of the vehicle, demisting processes are realized by dehumidifying the air without exceeding the ambient temperature in order to provide comfortable temperature. In order to realize demisting process, first the humidity in the medium is condensed by cooling with the air conditioning system. Then, the condensed humidity is heated and the relative humidity ratio is reduced. However, energy consumption of these air conditioning systems that are used as standard is high.

In air drying systems with solid desiccant used in the state of the art, the humidity amount of the air having fixed enthalpy passed through a desiccant rotor is decreased, and its temperature is increased. Similarly, the regeneration air entering into the desiccant rotor is passed through some part of the desiccant rotor as hot air after it is heated, and its temperature is decreased in fixed enthalpy by some amount of water vaporizing therein due to high temperature. Then, hot and humid air is discharged to outer environment from the desiccant rotor, and the obtained dry hot air is passed through the water serpentine, ant it is given to the medium by providing the temperature required for the comfort level. In the desiccant rotor known in the state of the art, there are rotor rotated with the belt and pulley method, two fans and a regeneration air heater in order to provide dried air and regeneration air flow. These systems are not preferred since they are heavy to be used in vehicles and they are expensive.

United States Patent Document no US5512083A, an application known in the state of the art, discloses a system which blows humid air by taking dry and hot air. In the said invention, desiccant rotor and defroster is used, and thus humid air is enabled to be blown by taking the dry air in the vehicle cabin. However, in the said patent document an additional drive system is needed in order to rotate the rotor, and this causes the system to consume extra energy.

United States Patent Document no US5873256A, an application known in the state of the art, discloses sending hot and dry air in the vehicle cabin inside the cabin as humid and warm air by using a defroster and a desiccant rotor. There are air filters in the system provided in the said invention, and they provide antibacterial feature. Furthermore, heat and relative humidity on vehicle windows are enabled to be reduced. Other examples are disclosed in US4071336, US5878590, JP2006306293 and in JP 2006213090. However, in the said patent documents an additional drive system is needed in order to rotate the rotor, and this causes the system to consume extra energy.

### The Problems Solved with the Invention

The objective of the present invention is to provide an air drying and heating system with a solid desiccant which enables to generate warm and humid cabin blowing air with hot and dry defroster air by means of the hot ait coming from HVAC module in vehicles.

Another objective of the present invention is to provide an air drying and heating system with a solid desiccant which contributes to cleaning bacteria in the air by use of an antibacterial desiccant.

A further objective of the present invention is to provide an air drying and heating system with a solid desiccant which enables the hot air with reduced relative humidity to be blown towards the vehicle windows in order to demist the mist occurring on the vehicle windows.

Yet another objective of the present invention is to provide an air drying and heating system with a solid desiccant which has low energy consumption. This is achieved by an air drying and heating system according to claim 1.

### Detailed Description of the Invention

An air drying and heating system with a solid desiccant developed to fulfill the objectives of the present invention is illustrated in the accompanying figures, in which:

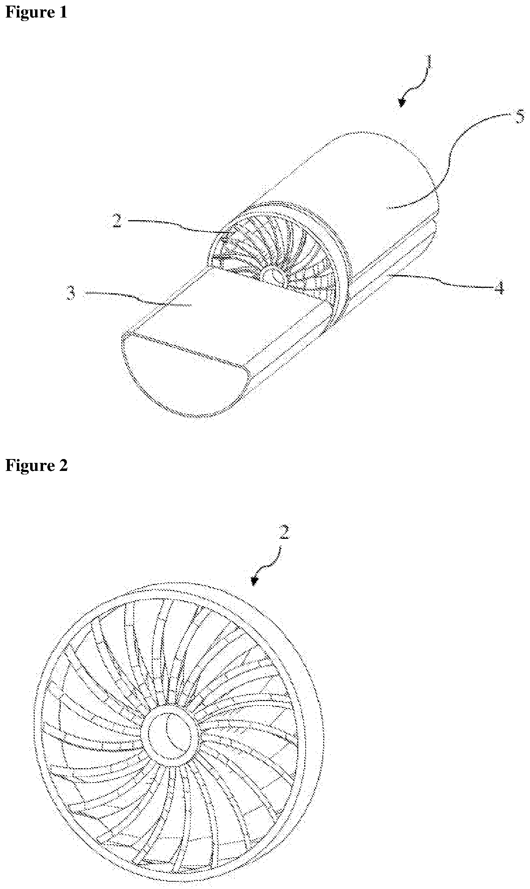

Figure 1 is the view of an air drying and heating system with a solid desiccant.

The components shown in the figures are each given reference numbers as follows:
**1.** Air drying and heating system with solid desiccant
**2.** Desiccant rotor
**3.** HVAC air duct
**4.** Cabin air duct
**5.** Defroster air duct

An air drying and heating system with a solid desiccant (1), which is developed for the demister systems of the vehicles, and which provides comfort for the driver in the vehicle cabin, essentially comprises
- at least one desiccant rotor (2) which has dehumidifying feature, enables air flow by circularly moving around its own axis, and which is designed in form of a fan,
- at least one HVAC air duct (3) which is located in front of the flat surface of the cylindrical shaped desiccant rotor (2), and through which the air coming from the HVAC module passes,
- at least one cabin air duct (4) which is located in front of the other flat surface of the cylindrical shaped desiccant rotor (2), and through which the air going to the cabin passes,
- at least one defroster air duct (5) which is positioned next to cabin air duct (4) in front of the other flat surface of the cylindrical shaped desiccant rotor (2), and through which the dry and hot air passes.

The inventive air drying and heating system with a solid desiccant (1) has desiccant rotor (2) which has dehumidifying feature, enables air flow by circularly moving around its own axis and provides air flow, and which is designed in form of a fan. Preferably there is a HVAC duct (3) formed by cutting a cylinder as semi-circle located in front of the flat surface of the cylindrical shaped desiccant rotor (2).

There is a defroster air duct (5) through which the dry and hot air passes and located next to the cabin air duct (4) which is positioned in front of the other flat surface of the cylindrical desiccant rotor (2) and through which the air going to the cabin passes. Optionally, the cabin air duct (4) is formed by cutting the cylinder in form a semi-circle, and it is positioned in front of the flat surface of the desiccant rotor (2). Similarly, defroster air duct (5) is formed by cutting the cylinder in form a semi-circle, and it is positioned in front of the desiccant rotor (2) such that it will form a whole cylinder next to the cabin air duct (4).

According to the invention, the desiccant rotor (2) moves circularly around its own axis by means of the hot air coming from the HVAC air duct (3) draws the humid and warm air in the cabin therein by means of its circular movement. Desiccant rotor (2) absorbs the warm and humid air coming from the cabin, and it sends the dry and hot air to the defroster air duct (5) located in front of the other flat surface of the desiccant rotor (2). Dry and hot air coming inside the defroster air duct (5) is sent to the windows for demisting.

The desiccant rotor (2) which is located at one end of the HVAC air duct (3) and preferably designed in form of a fan blade causes the temperature of the hot air coming from the HVAC air duct (3) to decrease. Desiccant rotor (2) releases water vapor to the medium. In a preferred embodiment of the invention, LiCI, Silica Gel, Zeolit and similar micro cellular materials can be used as desiccant in the desiccant rotor (2). Using LiCl in the desiccant rotor (2) contributes to cleaning the bacteria in the air. The air in low temperature coming from the HVAC air duct (3) receives water vapor from the desiccant rotor (2) and it starts to get humid. The warm and humid air generated in the desiccant rotor (2) is sent to the cabin air duct (4) located in front of the other flat surface of the cylindrical desiccant rotor (2), and it is enabled that the warm and humid air is given to the medium in which the driver and the passengers are present via the cabin air duct (4).

## Claims

1. An air drying and heating system with a solid desiccant (1), which is developed for the demister systems of the vehicles, and which provides comfort for the driver in the vehicle cabin, essentially comprising:
- at least one cylindrical shaped desiccant rotor (2) which has dehumidifying feature, enables air flow by circularly moving around its own axis, and which is designed in form of a fan, the at least one cylindrical shaped desiccant rotor (2) having a first and a second flat surfaces,
- at least one HVAC air duct (3) which is located in front of the first flat surface of the cylindrical shaped desiccant rotor (2), and through which the air coming from the HVAC module passes,
- at least one cabin air duct (4) which is located in front of the other flat surface of the cylindrical shaped desiccant rotor (2), and through which the air going to the cabin passes,
- at least one defroster air duct (5) which is positioned next to cabin air duct (4) in front of the other flat surface of the cylindrical shaped desiccant rotor (2), and through which the dry and hot air passes, and **characterised in that**,
- the at least one cylindrical shaped desiccant rotor (2) moves circularly around its own axis by means of the hot air coming from the HVAC air duct (3).

2. An air drying and heating system with a solid desiccant (1) according to claim 1, **characterized by** at least one HVAC air duct (3) which is formed by cutting the cylinder in shape of a semi-circle.

3. An air drying and heating system with a solid desiccant (1) according to claim 1, wherein LiCI, Silica Gel, Zeolit and similar micro cellular materials are used as desiccant in the cylindrical shaped desiccant rotor (2).

## Patentansprüche

1. Lufttrocknungs- und Heizsystem mit einem festen Trockenmittel (1), das für die Demistersysteme der Fahrzeuge entwickelt wurde und dem Fahrer Komfort in der Fahrzeugkabine bietet, im Wesentlichen umfassend:
- mindestens einen zylindrisch geformten Trockenmittelrotor (2), der eine Entfeuchtungsfunktion aufweist, eine Luftströmung durch kreisförmige Bewegung um seine eigene Achse ermöglicht und der in Form eines Ventilators gestaltet ist, der mindestens einen zylindrisch geformten Trockenmittelrotor (2) mit einer ersten und einer zweiten ebenen Oberfläche aufweist,
- mindestens einen HVAC-Luftkanal (3), der sich vor der ersten ebenen Fläche des zylindrisch geformten Trockenmittelrotors (2) befindet und durch den die vom HVAC-Modul kommende Luft strömt,
- mindestens einen Kabinenluftkanal (4), der sich vor der anderen ebenen Fläche des zylindrisch geformten Trockenmittelrotors (2) befindet und durch den die in die Kabine eintretende Luft strömt,
- mindestens einen Entfrosterluftkanal (5), der neben dem Kabinenluftkanal (4) vor der anderen ebenen Oberfläche des zylindrisch geformten Trockenmittelrotors (2) angeordnet ist und durch den die trockene und heiße Luft strömt, und **dadurch gekennzeichnet, dass**,
- der mindestens eine zylindrisch geformte Trockenmittelrotor (2) sich kreisförmig um seine eigene Achse mittels der aus dem HVAC-Luftkanal (3) kommenden Heißluft bewegt.

2. Lufttrocknungs- und Heizsystem mit einem festen Trockenmittel (1) nach Anspruch 1, **gekennzeichnet durch** mindestens einen HVAC-Luftkanal (3), der durch Schneiden des Zylinders in Form eines Halbkreises gebildet ist..

3. Lufttrocknungs- und Heizsystem mit einem festen Trockenmittel (1) nach Anspruch 1, wobei LiCl, Silizium-Gel, Zeolith und ähnliche mikrozelluläre Materialien als Trockenmittel in dem zylindrisch geformten Trockenmittelrotor (2) verwendet werden.

## Revendications

1. Système de séchage et de chauffage à l'air avec un dessiccatif solide (1), qui a été développé pour les systèmes de désembuage des véhicules et qui assure le confort du conducteur dans l'habitacle du véhicule, comprenant essentiellement :
- au moins un rotor dessiccatif de forme cylindrique (2) qui présente un dispositif de déshumidification et qui permet l'écoulement de l'air en se déplaçant de façon circulaire autour de son propre axe, et qui est conçu sous la forme d'un ventilateur, le au moins un rotor dessiccatif (2) de forme cylindrique présentant une première et une seconde surfaces planes,
- au moins un conduit d'air HVAC (3) qui est situé devant la première surface plane du rotor dessiccatif cylindrique (2), et à travers lequel passe l'air provenant du module HVAC,
- au moins un conduit d'air de cabine (4) qui est situé devant l'autre surface plane du rotor dessiccatif cylindrique (2), et à travers lequel passe l'air qui va à la cabine,
- au moins un conduit d'air de dégivrage (5) qui est placé à côté du conduit d'air de cabine (4) devant l'autre surface plane du rotor dessiccatif cylindrique (2), et à travers lequel passe l'air sec et l'air chaud, et **caractérisé en ce que**,
- le rotor dessiccatif (2) de forme cylindrique au moins se déplace de façon circulaire autour de son propre axe au moyen de l'air chaud provenant du conduit d'air HVAC (3).

2. Système de séchage et de chauffage à l'air avec un dessiccatif solide (1) selon la revendication 1, **caractérisé en ce que** au moins un conduit d'air HVAC (3) qui est formé en découpant le cylindre en forme de demi-cercle.

3. Système de séchage et de chauffage à l'air avec un dessiccatif solide (1) selon la revendication 1, dans lequel LiCl, Silica Gel, Zeolit et des matériaux microcellulaires similaires sont utilisés comme dessiccatifs dans le rotor dessiccatif de forme cylindrique (2).
